# EUROPEAN PATENT APPLICATION

(11) **EP 4 793 247 A1**
(43) Date of publication of application: **19.08.2026**
(21) Application number: 26153236.0
(22) Date of filing: 21.01.2026
(51) Int. Cl.: C03C 3/102, C03C 3/105, C03C 3/108, C03C 4/20

(54) **GLASS COMPOSITION**

(30) Priority: 18.02.2025 CN 202510177097
(71) Applicant: CDGM Glass Co. Ltd., Chengdu, Sichuan 610100 (CN)
(72) Inventor: Mao, Lulu, Chengdu (CN); Kuang, Bo, Chengdu (CN); Liu, Zhenyu, Chengdu (CN); Wu, Xuyi, Chengdu (CN); Wang, Youming, Chengdu (CN)
(74) Representative: WSL Patentanwälte Partnerschaft mbB

(57) **Abstract**

The present application provides a glass composition with high ultraviolet light transmittance and excellent chemical stability. The glass composition comprises the following components expressed in percentage by weight: 58% to 75% of SiO₂; 13% to 28% of PbO; 2% to 12% of Na₂O; 3% to 13% of K₂O, wherein the ratio of (Na₂O + K₂O) to PbO is in a range of 0.2 to 1.5. Through rational composition design, the glass composition obtained in the present invention exhibits excellent chemical stability and high ultraviolet light transmittance.

## Description

### TECHNICAL FIELD

The present invention relates to a glass composition, and more particularly to a glass composition with high ultraviolet light transmittance and excellent chemical stability.

### BACKGROUND

As chip manufacturing technology advances toward lower linewidths and higher efficiency, lithography equipment operating in the ultraviolet band is required to achieve higher resolution, greater light flux, and larger exposure areas. Glass elements made from conventional glass materials suffer from a significant decline in transmittance under prolonged ultraviolet irradiation, which poses a critical issue for various lithography equipment operating in the ultraviolet band. Therefore, glass materials used in lithography equipment need to have a larger diameter, along with superior radiation resistance, transmittance, and optical uniformity. On the other hand, glass comes into contact with a large amount of corrosive media during the processing and use of glass. If its chemical stability, such as acid resistance stability and hydrolytic resistance stability, is poor, the imaging quality and service life of the glass will be adversely affected.

### SUMMARY OF THE INVENTION

The technical problem addressed by the present invention is to provide a glass composition with high ultraviolet light transmittance and excellent chemical stability.

The technical solution adopted by the present invention to solve the technical problem is as follows:
(1) A glass composition comprises the following components expressed in percentage by weight: 58% to 75% of SiO₂; 13% to 28% of PbO; 2% to 12% of Na₂O; 3% to 13% of K₂O, wherein the ratio of (Na₂O + K₂O) to PbO is in a range of 0.2 to 1.5.
(2) The glass composition according to (1), the glass composition further comprises the following components expressed in percentage by weight: 0% to 5% of Li₂O; and/or 0% to 4% of Al₂O₃; and/or 0% to 4% of ZrO₂; and/or 0% to 8% of RO; and/or 0% to 4% of B₂O₃; and/or 0% to 5% of Ln₂O₃; and/or 0% to 3% of Nb₂O₅; and/or 0% to 3% of WO₃; and/or 0% to 3% of ZnO; and/or 0% to 3% of TiO₂; and/or 0% to 1% of a fining agent; wherein RO is one or more selected from the group consisting of BaO, SrO, CaO, and MgO; wherein Ln₂O₃ is one or more selected from the group consisting of La₂O₃, Gd₂O₃, Y₂O₃, and Yb₂O₃; and wherein the fining agent is one or more selected from the group consisting of Sb₂O₃, SnO₂, and CeO₂.
(3) A glass composition comprises SiO₂, PbO, Na₂O and K₂O expressed in percentage by weight, a ratio of (Na₂O + K₂O) to PbO is in the range of 0.2 to 1.5, and the glass composition has an acid resistance stability (D_{A}) of Class 2 or higher, a hydrolytic resistance stability (D_{W}) of Class 2 or higher, and a transmittance τ₃₆₅ₙₘ at 365 nm of 98.5% or more.
(4) The glass composition according to (3), comprises the following components expressed in percentage by weight: 58% to 75% of SiO₂; and/or 13% to 28% of PbO; and/or 2 to 12% of Na₂O; and/or 3 to 13% of K₂O; and/or 0% to 5% of Li₂O; and/or 0% to 4% of Al₂O₃; and/or 0% to 4% of ZrO₂; and/or 0% to 8% of RO; and/or 0% to 4% of B₂O₃; and/or 0% to 5% of Ln₂O₃; and/or 0% to 3% of Nb₂O₅; and/or 0% to 3% of WO₃; and/or 0% to 3% of ZnO; and/or 0% to 3% of TiO₂; and/or 0% to 1% of a fining agent; wherein RO is one or more selected from the group consisting of BaO, SrO, CaO and MgO; wherein Ln₂O₃ is one or more selected from the group consisting of La₂O₃, Gd₂O₃, Y₂O₃ and Yb₂O₃; and wherein the fining agent is one or more selected from the group consisting of Sb₂O₃, SnO₂ and CeO₂.
(5) The glass composition according to any one of (1) to (4), the components of the glass composition are expressed in percentage by weight, and satisfy one or more of the following 5 conditions:
   1) the ratio of (SiO₂ + Na₂O) to PbO is in the range of 2.7 to 6.0, preferably the ratio of (SiO₂ + Na₂O) to PbO is in the range of 2.9 to 5.5, more preferably (SiO₂+Na₂O)/PbO is 3.0 to 5.0, further preferably (SiO₂+Na₂O)/PbO is 3.2 to 4.5;
   2) the ratio of (Na₂O + K₂O) to PbO is in the range of 0.3 to 1.3, preferably the ratio of (Na₂O + K₂O) to PbO is in the range of 0.4 to 1.0, more preferably the ratio of (Na₂O + K₂O) to PbO is in the range of 0.5 to 0.9;
   3) the ratio of SiO₂ to (Na₂O + K₂O) is in the range of 2.5 to 12.0, preferably the ratio of SiO₂ to (Na₂O + K₂O) is in the range of 3.0 to 10.0, more preferably the ratio of SiO₂ to (Na₂O + K₂O) is in the range of 3.5 to 8.0, further preferably the ratio of SiO₂ to (Na₂O + K₂O) is in the range of 4.0 to 6.0;
   4) the ratio of (RO + ZnO) to K₂O is 1.0 or less, preferably the ratio of (RO + ZnO) to K₂O is 0.8 or less, more preferably (RO+ZnO)/K₂O is 0.5 or less, further preferably (RO+ZnO)/K₂O is 0.2 or less;
   5) the ratio of (B₂O₃ + Al₂O₃ + TiO₂ + Nb₂O₅ + WO₃ + ZrO₂) to Na₂O is 1.0 or less; preferably the ratio of (B₂O₃ + Al₂O₃ + TiO₂ + Nb₂O₅ + WO₃ + ZrO₂) to Na₂O is 0.8 or less, more preferably (B₂O₃+Al₂O₃+TiO₂+Nb₂O₅+WO₃+ZrO₂)/Na₂O is 0.5 or less, further preferably (B₂O₃+Al₂O₃+TiO₂+Nb₂O₅+WO₃+ZrO₂)/Na₂O is 0.2 or less,

RO is one or more selected from the group consisting of BaO, SrO, CaO and MgO.
(6) The glass composition according to any one of (1) to (4), the components of the glass composition are expressed in percentage by weight, and satisfy: 60% to 72% of SiO₂, preferably 63% to 70% of SiO₂; and/or 15% to 25% of PbO, preferably 17% to 23% of PbO; and/or 3% to 10% of Na₂O, preferably 5% to 9% of Na₂O; and/or 5% to 12% of K₂O, preferably 6% to 11% of K₂O; and/or 0% to 2% of Al₂O₃, preferably 0% to 1% of Al₂O₃; and/or 0% to 4% of RO, preferably 0% to 1.5% of RO; and/or 0% to 3% of Li₂O, preferably 0% to 2% of Li₂O; and/or 0% to 2% of ZrO₂, preferably 0% to 1% of ZrO₂; and/or 0% to 3% of B₂O₃, preferably 0% to 1% of B₂O₃; and/or 0% to 3% of Ln₂O₃, preferably 0% to 2% of Ln₂O₃; and/or 0% to 2% of Nb₂O₅, preferably 0% to 1% of Nb₂O₅; and/or 0% to 2% of WO₃, preferably 0% to 1% of WO₃; and/or 0% to 2% of ZnO, preferably 0% to 1% of ZnO; and/or 0% to 2% of TiO₂, preferably 0% to 1% of TiO₂; and/or 0% to 0.8% of a fining agent, preferably 0% to 0.5% of a fining agent; wherein RO is one or more selected from the group consisting of BaO, SrO, CaO and MgO; wherein Ln₂O₃ is one or more selected from the group consisting of La₂O₃, Gd₂O₃, Y₂O₃ and Yb₂O₃; and wherein the fining agent is one or more selected from the group consisting of Sb₂O₃, SnO₂ and CeO₂.
(7) The glass composition according to any one of (1) to (4) is free of Li₂O; and/or is free of Al₂O₃; and/or is free of ZrO₂; and/or is free of SrO; and/or is free of CaO; and/or is free of MgO; and/or is free of BaO; and/or is free of B₂O₃; and/or is free of Nb₂O₅; and/or is free of WO₃; and/or is free of ZnO; and/or is free of TiO₂; and/or is free of F.
(8) The glass composition according to any one of (1) to (4), wherein the glass composition has a transmittance τ₃₆₅ₙₘ at 365 nm of 98.5% or more, preferably 99.0% or more, more preferably 99.5% or more; and/or a resistance to ultraviolet-induced transmittance decay at 365 nm, Δτ₃₆₅ₙₘ, of 2% or less, preferably 1.5% or less, more preferably 1.0% or less; further preferably 0.9% or less.
(9) The glass composition according to any one of (1) to (4) has a refractive index n_{d} in the range of 1.50 to 1.57, preferably 1.51 to 1.56, more preferably 1.52 to 1.55; and/or an Abbe number v_{d} in the range of 46 to 52, preferably 47 to 50, more preferably 47.5 to 49.5; and/or an acid resistance stability (D_{A}) of Class 2 or higher, preferably Class 1; and/or a hydrolytic resistance stability (D_{W}) of Class 2 or higher, preferably Class 1; and/or a coefficient of thermal expansion α_{20/120°C} of 98 × 10⁻⁷ /K or less, preferably 90×10⁻⁷/K or less; more preferably 85×10⁻⁷/K or less; and/or a glass transition temperature T_{g} of 490 °C or less, preferably 480°C or less, more preferably 470°C or less; and/or a bubble concentration of Grade A or higher, preferably Grade A₀ or higher, more preferably Grade A₀₀; and/or an extent of striae of Grade C or higher, preferably Grade B or higher.
(10) A glass preform, is made of the glass composition according to any one of (1) to (9).
(11) A glass element, is made of the glass composition according to any one of (1) to (9), or made of the glass preform according to (10).
(12) A device, comprises the glass composition according to any one of (1) to (9), and/or comprises the glass element according to (11).

The beneficial effects of the present invention are as follows: Through rational composition design, the glass composition obtained in the present invention exhibits excellent chemical stability and high ultraviolet light transmittance.

### DETAILED DESCRIPTION

Embodiments of the glass composition of the present invention will be described in detail below. However, the present invention is not limited to the embodiments described below and can be implemented with appropriate modifications within the scope of the purpose of the present invention. Furthermore, although descriptions of repetitive parts may be appropriately omitted, the essence of the invention is not limited thereby. In the following description, the glass composition of the present invention is sometimes simply referred to as "glass".

### [Glass Composition]

The range of each component (constituent) of the glass composition of the present invention is described below. In the present invention, unless otherwise specified, the content, total content, and overall content of each component are all expressed in percent by weight (wt%), that is, as a weight percentage relative to the total amount of glass material converted to an oxide composition. Herein, the term "converted to an oxide composition" means that when oxides, composite salts, hydroxides, etc., used as raw materials for the optical glass composition of the present invention decompose and transform into oxides upon melting, the total amount of these oxides is taken as 100%.

Unless otherwise specified in a particular context, the numerical ranges listed in the present invention include the upper and lower limits, and the terms "or more" and "or less" include the endpoint values and encompass all integers and fractions within the range, not limited to the specific values listed when defining the range. The term "and/or" as used herein is inclusive; for example, "A and/or B" means only A, only B, or both A and B.

### < Essential and Optional Components >

SiO₂ is the primary network former component of the glass of the present invention. If the content of SiO₂ is less than 58%, the ultraviolet light transmittance of the glass becomes low, which is disadvantageous for ultraviolet optical systems requiring long optical paths and high irradiance. Therefore, the lower limit of the content of SiO₂ is 58%, preferably 60%, and more preferably 63%. If the content of SiO₂ exceeds 75%, it becomes difficult for the refractive index of the glass to meet design requirements. Simultaneously, the glass requires melting at higher temperatures. An excessively high melting temperature leads to an exponential increase in the erosion of the crucible by the molten glass, causing a rapid rise in the content of ions such as iron (Fe) and platinum (Pt) ions, which have strong absorption in the ultraviolet band, and consequently resulting in a rapid decline in ultraviolet light transmittance. Therefore, the upper limit of the SiO₂ content is 75%, preferably 72%, and more preferably 70%.

PbO has the effects of increasing the refractive index and ultraviolet light transmittance of the glass and decreasing the transition temperature. However, if the content of PbO is too high, the chemical stability of the glass decreases and the thermal expansion coefficient increases. Therefore, the content of PbO is 13% to 28%, preferably 15% to 25%, and more preferably 17% to 23%.

Na₂O can improve the meltability, devitrification resistance, and ultraviolet radiation resistance of the glass. However, when the content of Na₂O is too high, the thermal expansion coefficient of the glass increases and the refractive index decreases. Therefore, the content of Na₂O is 2% to 12%, preferably 3% to 10%, and more preferably 5% to 9%.

Through extensive experimental research, the inventors have found that in some embodiments, controlling the ratio of the total content of SiO₂ and Na₂O to the content of PbO, (SiO₂+Na₂O)/PbO, within the range of 2.7 to 6.0 is beneficial for improving the bubble concentration and extent of striae of the glass and reducing the thermal expansion coefficient of the glass. Therefore, it is preferable that (SiO₂+Na₂O)/PbO is 2.7 to 6.0, more preferably 2.9 to 5.5, still more preferably 3.0 to 5.0, and yet more preferably 3.2 to 4.5.

K₂O has the effects of improving the thermal stability and meltability of the glass, decreasing the transition temperature, and also reducing the high-temperature viscosity of the glass, thereby enhancing the ultraviolet light transmittance of the glass. However, if the content of K₂O is too high, the devitrification resistance and chemical stability of the glass decline. Therefore, in the present invention, the content of K₂O is 3% to 13%, preferably 5% to 12%, and more preferably 6% to 11%.

In some embodiments, controlling the ratio of the total content of Na₂O and K₂O to the content of PbO, (Na₂O+K₂O)/PbO, within the range of 0.2 to 1.5 can optimize the ultraviolet light transmittance of the glass, improve the ultraviolet radiation resistance of the glass, and prevent deterioration of the chemical stability and transition temperature of the glass. Therefore, it is preferable that (Na₂O+K₂O)/PbO is 0.2 to 1.5, more preferably 0.3 to 1.3, still more preferably 0.4 to 1.0, and yet more preferably 0.5 to 0.9.

In some embodiments, controlling the ratio of the content of SiO₂ to the total content of Na₂O and K₂O, SiO₂/(Na₂O+K₂O), within the range of 2.5 to 12.0 can enhance the ultraviolet radiation resistance and extent of striae of the glass and prevent an increase in transition temperature of the glass. Therefore, it is preferable that SiO₂/(Na₂O+K₂O) is 2.5 to 12.0, more preferably 3.0 to 10.0, still more preferably 3.5 to 8.0, and yet more preferably 4.0 to 6.0.

Li₂O can effectively decrease the transition temperature of the glass. However, as glass is typically melted in platinum or platinum alloy vessels, the Li in the glass composition tends to corrode these vessels during high-temperature melting. This can result in the formation of more platinum-containing inclusions in the finished glass, leading to a decline in ultraviolet light transmittance of the glass. Therefore, in the present invention, the content of Li₂O is 0% to 5%, preferably 0% to 3%, and more preferably 0% to 2%. In some embodiments, it is further preferred that Li₂O is not contained.

Al₂O₃ can enhance the compactness of the internal structure of the glass, improve the ultraviolet light transmittance and chemical stability of the glass, and modify the high-temperature viscosity of the glass. However, if the content of Al₂O₃ exceeds 4%, stones are prone to form inside the glass, degrading the internal quality of the glass. Therefore, the content of Al₂O₃ is 0% to 4%, preferably 0% to 2%, and more preferably 0 to 1%. In some embodiments, it is further preferred that Al₂O₃ is not contained.

ZrO₂ can improve the devitrification resistance of the glass, enhance the chemical stability and mechanical performances of the glass, decrease the erosion of crucible materials during the melting of glass raw materials, and increase the ultraviolet light transmittance of the glass. If the content of ZrO₂ is too high, the melting difficulty of the glass increases, the melting temperature rises, and this can lead to inclusions within the glass and a decline in ultraviolet light transmittance. Therefore, in the present invention, the content of ZrO₂ is 0% to 4%, preferably 0% to 2%, and more preferably 0% to 1%. In some embodiments, it is further preferred that ZrO₂ is not contained.

The alkaline earth metal oxides RO (where RO is one or more selected from the group consisting of BaO, SrO, CaO, and MgO) can adjust the optical constants and high-temperature viscosity of the glass. However, high content of RO leads to a decrease in the ultraviolet light transmittance and chemical stability of the glass. Therefore, the content of RO is 0% to 8%, preferably 0% to 4%, and more preferably 0% to 1.5%. In some embodiments, it is further preferred that BaO is not contained; and/or SrO is not contained; and/or CaO is not contained; and/or MgO is not contained.

B₂O₃ can improve the meltability of the glass. However, if its content is too high, it causes rapid erosion of the crucible by the molten glass, leading to a decline in the ultraviolet light transmittance of the glass. Therefore, the content of B₂O₃ is 0% to 4%, preferably 0% to 3%, and more preferably 0% to 1%. In some embodiments, it is further preferred that B₂O₃ is not contained.

Ln₂O₃ (where Ln₂O₃ is one or more selected from the group consisting of La₂O₃, Gd₂O₃, Y₂O₃, and Yb₂O₃) are components that can increase the refractive index and chemical stability of the glass. By limiting the content of Ln₂O₃ to 5% or less, a decrease in the devitrification resistance of the glass and an exceedance of the design requirements for the refractive index and Abbe number of the glass can be prevented. Therefore, the content of Ln₂O₃ is 0% to 5%, preferably 0% to 3%, and more preferably 0% to 2%.

Nb₂O₅, TiO₂, and WO₃ belong to the category of high-refractive-index, high-dispersion components. They can enhance the ultraviolet radiation resistance of the glass and also increase the refractive index and dispersion of the glass. However, high content of these oxides will decrease the ultraviolet light transmittance of the glass. Therefore, in the present invention, the content of Nb₂O₅ is 0% to 3%, preferably 0 to 2%, and more preferably 0 to 1%; the content of TiO₂ is 0% to 3%, preferably 0 to 2%, and more preferably 0% to 1%; and the content of WO₃ is 0% to 3%, preferably 0% to 2%, and more preferably 0% to 1%. In some embodiments, it is further preferred that TiO₂ is not contained; and/or Nb₂O₅ is not contained; and/or WO₃ is not contained.

ZnO can strengthen the network structure of the glass and improve its refractive index and ultraviolet light transmittance. However, if the content of ZnO is too high, the phase separation tendency of the glass increases, which conversely leads to a decline in ultraviolet light transmittance, and the extent of striae of the glass deteriorates. Therefore, the content of ZnO is 0% to 3%, preferably 0% to 2%, and more preferably 0% to 1%. In some embodiments, it is further preferred that ZnO is not contained.

In some embodiments, controlling the ratio of the total content of RO and ZnO to the content of K₂O, (RO+ZnO)/K₂0, to be 1.0 or less can prevent deterioration of the thermal expansion coefficient and bubble concentration of the glass while improving the ultraviolet light transmittance and chemical stability of the glass. Therefore, it is preferable that (RO+ZnO)/K₂O is 1.0 or less, more preferably 0.8 or less, still more preferably 0.5 or less, and yet more preferably 0.2 or less.

In some embodiments, controlling the ratio of the total content of B₂O₃, Al₂O₃, TiO₂, Nb₂O₅, WO₃, and ZrO₂ to the content of Na₂O, (B₂O₃+Al₂O₃+TiO₂+Nb₂O₅+WO₃+ZrO₂)/Na₂O, to be 1.0 or less can prevent reduction of the ultraviolet light transmittance and extent of striae of the glass. Therefore, it is preferable that (B₂O₃+Al₂O₃+TiO₂+Nb₂O₅+WO₃+ZrO₂)/Na₂O is 1.0 or less, more preferably 0.8 or less, still more preferably 0.5 or less, and yet more preferably 0.2 or less.

In the present invention, by containing 0% to 1% of one or more components selected from Sb₂O₃, SnO₂, and CeO₂ as the fining agent, the fining effect of the glass can be improved, thereby enhancing the bubble concentration of the glass. Preferably, the content of the fining agents is 0% to 0.8%, and more preferably 0% to 0.5%.

### < Components that Should Not Be Contained >

In the glass of the present invention, oxides of transition metals such as V, Cr, Mn, Fe, Co, Ni, Cu, Ag, and Mo, even if contained in small amounts individually or in combination, can color the glass and cause absorption at specific wavelengths in the visible light region. This would diminish the property of the present invention aimed at improving visible light transmittance. Therefore, the glass composition of the present invention preferably does not contain the aforementioned components. Fluorine (F) exhibits significant volatilization during glass melting, leading to fluctuations in the refractive index and intrinsic quality (extent of striae, bubble concentration) of the glass and posing hazards to the production environment and the health of operators. Therefore, it is preferred that F is not contained.

The terms "not contain" or "0%" as used herein mean that the compound, molecule, or element is not intentionally added as a raw material to the glass composition of the present invention. However, as raw materials and/or device for producing glass compositions, there may be certain impurities or components that are not intentionally added and may be present in small or trace amounts in the final glass composition, which is also within the scope of protection of the present invention patent.

In the following section, the performances of the glass composition of the present invention are described.

### < Refractive Index and Abbe Number >

The refractive index (n_{d}) and Abbe number (v_{d}) of the glass composition are tested according to the method specified in GB/T 7962.1-2010.

In some embodiments, the lower limit of the refractive index (n_{d}) of the glass composition of the present invention is 1.50, preferably 1.51, and more preferably 1.52.

In some embodiments, the upper limit of the refractive index (n_{d}) of the glass composition of the present invention is 1.57, preferably 1.56, and more preferably 1.55.

In some embodiments, the lower limit of the Abbe number (v_{d}) of the glass composition of the present invention is 46, preferably 47, and more preferably 47.5.

In some embodiments, the upper limit of the Abbe number (v_{d}) of the glass composition of the present invention is 52, preferably 50, and more preferably 49.5.

### < Transmittance at 365 nm >

The ultraviolet light transmittance of the glass composition of the present invention is characterized by the transmittance at 365 nm (τ₃₆₅ₙₘ). The transmittance at 365 nm (τ₃₆₅ₙₘ) is tested according to the method specified in GB/T 7962.12-2010, with a glass sample thickness of 10 mm.

In some embodiments, the transmittance at 365 nm (τ₃₆₅ₙₘ) of the glass composition of the present invention is 98.5% or more, preferably 99.0% or more, and more preferably 99.5% or more.

### < Ultraviolet Radiation Resistance Performance >

The ultraviolet radiation resistance performance of the glass composition is characterized by Δτ₃₆₅ₙₘ, which represents the resistance to ultraviolet-induced transmittance decay at 365 nm. A lower Δτ₃₆₅ₙₘ indicates superior ultraviolet radiation resistance of the glass.

The test method for Δτ₃₆₅ₙₘ is as follows: First, the initial transmittance is measured at 365 nm (τ₃₆₅ₙₘ₋₁) of the sample according to the method specified in GB/T 7962.12-2010. Then, the sample is irradiated using a high-pressure mercury lamp with a power density of 1 W/cm² on the glass surface for 2 hours. After irradiation, the transmittance is measured at 365 nm again (τ₃₆₅ₙₘ₋₂) according to the same standard. The difference between the two measurements, τ₃₆₅ₙₘ₋₁ - τ₃₆₅ₙₘ₋₂, is the transmittance decay at this wavelength. The thickness of the glass sample is 10 mm.

In some embodiments, the resistance to ultraviolet-induced transmittance decay at 365 nm (Δτ₃₆₅ₙₘ) for the glass composition of the present invention is 2.0% or less, preferably 1.5% or less, more preferably 1.0% or less, and further preferably 0.9% or less.

### < Acid Resistance Stability >

The acid resistance stability (D_{A}) of the glass composition (powder method) is tested according to the method specified in GB/T 17129.

In some embodiments, the acid resistance stability (D_{A}) of the glass composition of the present invention is Class 2 or higher, preferably Class 1.

### < Hydrolytic Resistance Stability >

The hydrolytic resistance stability (D_{W}) of the glass composition (powder method) is tested according to the method specified in GB/T 17129.

In some embodiments, the hydrolytic resistance stability (D_{W}) of the glass composition of the present invention is Class 2 or higher, preferably Class 1.

### < Transition Temperature >

The transition temperature (T_{g}) of the glass composition is tested according to the method specified in GB/T 7962.16-2010.

In some embodiments, the transition temperature (T_{g}) of the glass composition of the present invention is 490°C or less, preferably 480°C or less, and more preferably 470°C or less.

### < Thermal Expansion Coefficient >

The thermal expansion coefficient (α_{20/120°C}) of the glass composition is tested between 20°C and 120°C according to the method specified in GB/T 7962.16-2010.

In some embodiments, the thermal expansion coefficient (α_{20/120°C}) of the glass composition of the present invention is 98×10⁻⁷/K or less, preferably 90×10⁻⁷/K or less, and more preferably 85×10⁻⁷/K or less.

### < Bubble Concentration >

The bubble concentration of the glass composition is measured and classified according to the method specified in GB/T 7962.8-2010.

In some embodiments, the bubble concentration of the glass composition of the present invention is Grade A or higher, preferably Grade A₀ or higher, and more preferably Grade A₀₀.

### < Extent of striae >

The extent of striae of the glass composition is tested by the following method: A striascope consisting of a point light source and a lens is used. The sample is observed from the direction where striae are most easily visible and compared with a standard sample. It is classified into four grades as specified in Table 1.

**Table 1. Extent of striae classification standard**

| Grade | Extent of striae |
|---|---|
| A | No striae visible to the naked eye under the specified inspection conditions. |
| B | Fine and dispersed striae are present under the specified conditions. |
| C | Slight parallel striae are present under the specified conditions. |
| D | Coarse parallel striae are present under the specified conditions. |

In some embodiments, the extent of striae of the glass composition of the present invention is Grade C or higher, preferably Grade B or higher.

### [Method for manufacturing the glass composition]

The method for manufacturing the glass composition of the present invention is as follows: The glass of the present invention is produced using conventional raw materials and conventional processes. The raw materials such as carbonates, nitrates, sulfates, hydroxides, oxides, and fluorides are used. After batching by conventional methods, the prepared batch is charged into a melting furnace (e.g., a platinum crucible, quartz crucible, etc.) at 1200 to 1500°C for melting. After fining, stirring, and homogenization, a homogeneous molten glass free of bubbles and undissolved substances is obtained. This molten glass is then cast into a mold and annealed. Those skilled in the art can appropriately select raw materials, process methods, and process parameters based on actual needs.

### [Glass Preform and Glass Element]

A glass preform can be fabricated from the produced glass composition using means such as, for example, direct gob forming, grinding/machining, or molding methods like hot pressing. That is, a glass precision preform can be formed by directly and precisely gob-forming the molten glass composition, or a glass preform can be made by mechanical processing such as grinding and polishing, or by first creating a preform blank for precision molding from the glass composition, then subjecting this preform blank to reheat pressing, followed by grinding/polishing to produce the glass preform. It should be noted that the means for preparing the glass preform are not limited to the aforementioned methods.

As mentioned above, the glass composition of the present invention is useful for various glass elements and optical designs. It is particularly preferable to form a preform blank from the glass composition of the present invention and use this preform blank for reheat pressing, precision press molding, etc., to manufacture glass elements such as lenses and prisms.

Both the glass preform and the glass element of the present invention are formed from the aforementioned glass composition of the present invention. The glass preform of the present invention possesses the excellent characteristics inherent to the glass composition; the glass element of the present invention possesses the excellent characteristics inherent to the glass composition and can provide various glass elements of high optical value, such as lenses and prisms.

Examples of lenses include various lenses with spherical or aspherical lens surfaces, such as concave meniscus lenses, convex meniscus lenses, biconvex lenses, biconcave lenses, plano-convex lenses, plano-concave lenses, and biplanar lenses.

### [Devices]

Glass elements formed from the glass composition of the present invention can be used to manufacture devices such as photographic device, imaging device, projection device, display device, lithography machines, vehicle-mounted device, and surveillance device.

### Examples

### < Glass Composition Examples >

To further clearly illustrate and explain the technical solutions of the present invention, the following non-limiting examples are provided.

In these examples, glass compositions having the compositions shown in Tables 2 to 4 were obtained using the manufacturing method for the glass composition described above. Furthermore, the properties of each glass were measured by the test methods described in the present invention, and the measurement results are presented in Tables 2 to 4.

**Table 2**

| Example (wt%) | 1# | 2# | 3# | 4# | 5# | 6# | 7# |
|---|---|---|---|---|---|---|---|
| SiO₂ | 65.7 | 65.8 | 63 | 65.7 | 66.6 | 65.4 | 61.7 |
| PbO | 18.4 | 19.8 | 20.7 | 17.6 | 18.2 | 19.5 | 21.4 |
| Na₂O | 7.1 | 6.8 | 6.5 | 9.1 | 6.6 | 8.1 | 7.2 |
| K₂O | 8.6 | 7.4 | 9.5 | 7.1 | 8.5 | 6.8 | 9.4 |
| Li₂O | 0 | 0 | 0 | 0 | 0 | 0 | 0 |
| Al₂O₃ | 0 | 0 | 0 | 0 | 0 | 0 | 0 |
| ZrO₂ | 0 | 0 | 0 | 0 | 0 | 0 | 0 |
| BaO | 0 | 0 | 0 | 0 | 0 | 0 | 0 |
| SrO | 0 | 0 | 0 | 0 | 0 | 0 | 0 |
| CaO | 0 | 0 | 0 | 0 | 0 | 0 | 0 |
| MgO | 0 | 0 | 0 | 0 | 0 | 0 | 0 |
| B₂O₃ | 0 | 0 | 0 | 0 | 0 | 0 | 0 |
| La₂O₃ | 0 | 0 | 0 | 0 | 0 | 0 | 0 |
| Gd₂O₃ | 0 | 0 | 0 | 0 | 0 | 0 | 0 |
| Y₂O₃ | 0 | 0 | 0 | 0 | 0 | 0 | 0 |
| Yb₂O₃ | 0 | 0 | 0 | 0 | 0 | 0 | 0 |
| Nb₂O₅ | 0 | 0 | 0 | 0 | 0 | 0 | 0 |
| WO₃ | 0 | 0 | 0 | 0 | 0 | 0 | 0 |
| ZnO | 0 | 0 | 0 | 0 | 0 | 0 | 0 |
| TiO₂ | 0 | 0 | 0 | 0 | 0 | 0 | 0 |
| Sb₂O₃ | 0.2 | 0.2 | 0.3 | 0.5 | 0.1 | 0.2 | 0.3 |
| SnO₂ | 0 | 0 | 0 | 0 | 0 | 0 | 0 |
| CeO₂ | 0 | 0 | 0 | 0 | 0 | 0 | 0 |
| Total | 100 | 100 | 100 | 100 | 100 | 100 | 100 |
| (SiO₂+Na₂O ) /PbO | 3.96 | 3.67 | 3.36 | 4.25 | 4.02 | 3.77 | 3.22 |
| (Na₂O+K₂O ) /PbO | 0.85 | 0.72 | 0.77 | 0.92 | 0.83 | 0.76 | 0.78 |
| (RO+ZnO) /K₂O | 0 | 0 | 0 | 0 | 0 | 0 | 0 |
| SiO₂/ (Na₂O+K₂O ) | 4.18 | 4.63 | 3.94 | 4.06 | 4.41 | 4.39 | 3.72 |
| (B₂O₃+Al₂O₃ +TiO₂+Nb₂ O₅+WO₃+Zr O₂ ) /Na₂O | 0 | 0 | 0 | 0 | 0 | 0 | 0 |
| n_{d} | 1.53148 | 1.53177 | 1.53524 | 1.52786 | 1.53064 | 1.53445 | 1.53217 |
| v_{d} | 48.41 | 49.03 | 47.85 | 48.36 | 48.18 | 47.68 | 48.52 |
| τ₃₆₅ₙₘ(%) | 99.7 | 99.8 | 99.8 | 99.6 | 99.7 | 99.9 | 99.8 |
| Δτ₃₆₅ₙₘ (%) | 0.8 | 0.6 | 0.7 | 0.5 | 0.7 | 0.6 | 0.7 |
| D_{A} | Class 1 | Class 1 | Class 1 | Class 1 | Class 1 | Class 1 | Class 1 |
| Dw | Class 1 | Class 1 | Class 1 | Class 1 | Class 1 | Class 1 | Class 1 |
| T_{g}(°C) | 462 | 465 | 462 | 463 | 458 | 461 | 460 |
| α_{20/120°C} (×10 to ⁷/K ) | 83 | 82 | 79 | 81 | 80 | 83 | 82 |
| Bubble concentratio n (Grade) | A₀₀ | A₀₀ | A₀₀ | A₀₀ | A₀₀ | A₀₀ | A₀₀ |
| Extent of striae (Grade) | B | B | B | B | B | B | B |

**Table 3**

| Example (wt%) | 8# | 9# | 10# | 11# | 12# | 13# | 14# |
|---|---|---|---|---|---|---|---|
| SiO₂ | 68.8 | 58.5 | 74.2 | 59.3 | 72.1 | 59.8 | 61.8 |
| PbO | 13.5 | 25.3 | 15.1 | 23.6 | 14.2 | 16.5 | 17.3 |
| Na₂O | 3.3 | 11.4 | 2.5 | 9.5 | 4.5 | 10.3 | 9.2 |
| K₂O | 12.2 | 3.4 | 4.2 | 5.8 | 6.7 | 11.2 | 6.7 |
| Li₂O | 1.5 | 0 | 0.5 | 0 | 0 | 0 | 0 |
| Al₂O₃ | 0 | 1.2 | 0.5 | 0 | 0 | 0 | 1.5 |
| ZrO₂ | 0 | 0 | 0 | 0 | 1.3 | 0 | 0 |
| BaO | 0 | 0 | 1 | 1.3 | 0 | 0 | 0 |
| SrO | 0 | 0 | 0 | 0 | 0 | 0.5 | 0 |
| CaO | 0 | 0 | 0 | 0 | 0 | 0.6 | 0 |
| MgO | 0 | 0 | 0 | 0 | 0 | 0.5 | 0 |
| B₂O₃ | 0.5 | 0 | 0 | 0 | 1 | 0 | 2.1 |
| La₂O₃ | 0 | 0 | 1.2 | 0 | 0 | 0 | 0 |
| Gd₂O₃ | 0 | 0 | 0 | 0 | 0 | 0 | 0 |
| Y₂O₃ | 0 | 0 | 0 | 0 | 0 | 0 | 0.5 |
| Yb₂O₃ | 0 | 0 | 0 | 0 | 0 | 0 | 0 |
| Nb₂O₅ | 0 | 0 | 0.5 | 0 | 0 | 0 | 0 |
| WO₃ | 0 | 0 | 0 | 0 | 0 | 0 | 0.5 |
| ZnO | 0 | 0 | 0 | 0 | 0 | 0 | 0.4 |
| TiO₂ | 0 | 0 | 0 | 0 | 0 | 0 | 0 |
| Sb₂O₃ | 0.2 | 0.1 | 0.3 | 0.5 | 0.1 | 0.6 | 0 |
| SnO₂ | 0 | 0.1 | 0 | 0 | 0 | 0 | 0 |
| CeO₂ | 0 | 0 | 0 | 0 | 0.1 | 0 | 0 |
| Total | 100 | 100 | 100 | 100 | 100 | 100 | 100 |
| (SiO₂+Na₂O) /PbO | 5.34 | 2.76 | 5.08 | 2.92 | 5.39 | 4.25 | 4.10 |
| (Na₂O+K₂O ) /PbO | 1.15 | 0.58 | 0.44 | 0.65 | 0.79 | 1.30 | 0.92 |
| (RO+ZnO ) /K₂O | 0 | 0 | 0.24 | 0.22 | 0 | 0.14 | 0.06 |
| SiO₂/ (Na₂O+K₂O ) | 4.44 | 3.95 | 11.07 | 3.88 | 6.44 | 2.78 | 3.89 |
| (BzO₃+AbO₃+Ti O₂+Nb₂O₅+WO₃ +ZrO₂ ) /Na₂O | 0.15 | 0.11 | 0.40 | 0 | 0.51 | 0 | 0.45 |
| n_{d} | 1.50622 | 1.56243 | 1.51426 | 1.55254 | 1.51632 | 1.50451 | 1.52146 |
| ν_{d} | 51.24 | 46.38 | 50.26 | 47.33 | 49.65 | 48.05 | 47.62 |
| τ₃₆₅ₙₘ (%) | 99.3 | 99.6 | 99.5 | 99.7 | 99.4 | 99.2 | 99.4 |
| Δτ₃₆₅ₙₘ (%) | 1.4 | 0.9 | 1.0 | 0.9 | 0.8 | 1.5 | 0.9 |
| D_{A} | Class 1 | Class 1 | Class 1 | Class 1 | Class 1 | Class 1 | Class 1 |
| Dw | Class 2 | Class 1 | Class 1 | Class 1 | Class 1 | Class 2 | Class 1 |
| T_{g}(°C) | 476 | 466 | 478 | 468 | 470 | 474 | 468 |
| α_{20/120°C} (× 10 to ⁷/K) | 85 | 93 | 85 | 91 | 85 | 84 | 85 |
| Bubble concentration (Grade) | A₀ | A₀ | A₀ | A₀ | A₀ | A₀₀ | A₀₀ |
| Extent of striae (Grade) | B | C | C | B | C | B | B |

**Table 4**

| Example (wt%) | 15# | 16# | 17# | 18# | 19# | 20# | 21# |
|---|---|---|---|---|---|---|---|
| SiO₂ | 59 | 67.7 | 63 | 66.6 | 65.6 | 60.4 | 62 |
| PbO | 22.4 | 18.2 | 20.4 | 18.9 | 19.4 | 21.3 | 20.5 |
| Na₂O | 5.8 | 6.3 | 7.4 | 5.6 | 8.2 | 7.8 | 8.5 |
| K₂O | 10.3 | 7.8 | 9.1 | 8.5 | 6.3 | 10.2 | 8.8 |
| Li₂O | 0 | 0 | 0 | 0 | 0 | 0 | 0 |
| Al₂O₃ | 0 | 0 | 0 | 0 | 0 | 0 | 0 |
| ZrO₂ | 0 | 0 | 0 | 0 | 0 | 0 | 0 |
| BaO | 0 | 0 | 0 | 0 | 0 | 0 | 0 |
| SrO | 0 | 0 | 0 | 0 | 0 | 0 | 0 |
| CaO | 0 | 0 | 0 | 0 | 0 | 0 | 0 |
| MgO | 0 | 0 | 0 | 0 | 0 | 0 | 0 |
| B₂O₃ | 0 | 0 | 0 | 0 | 0 | 0 | 0 |
| La₂O₃ | 0 | 0 | 0 | 0 | 0 | 0 | 0 |
| Gd₂O₃ | 0 | 0 | 0 | 0 | 0 | 0 | 0 |
| Y₂O₃ | 0 | 0 | 0 | 0 | 0 | 0 | 0 |
| Yb₂O₃ | 0 | 0 | 0 | 0 | 0 | 0 | 0 |
| Nb₂O₅ | 0 | 0 | 0 | 0 | 0 | 0 | 0 |
| WO₃ | 0 | 0 | 0 | 0 | 0 | 0 | 0 |
| ZnO | 1.4 | 0 | 0 | 0 | 0 | 0 | 0 |
| TiO₂ | 0.6 | 0 | 0 | 0 | 0 | 0 | 0 |
| Sb₂O₃ | 0.5 | 0 | 0.1 | 0.4 | 0.5 | 0.3 | 0.2 |
| SnO₂ | 0 | 0 | 0 | 0 | 0 | 0 | 0 |
| CeO₂ | 0 | 0 | 0 | 0 | 0 | 0 | 0 |
| Total | 100 | 100 | 100 | 100 | 100 | 100 | 100 |
| (SiO₂+Na₂O) /PbO | 2.89 | 4.07 | 3.45 | 3.82 | 3.80 | 3.20 | 3.44 |
| (Na₂O+K₂O ) /PbO | 0.72 | 0.77 | 0.81 | 0.75 | 0.75 | 0.85 | 0.84 |
| (RO+ZnO) /K₂O | 0.14 | 0 | 0 | 0 | 0 | 0 | 0 |
| SiO₂/ (Na₂O+K₂O ) | 3.66 | 4.80 | 3.82 | 4.72 | 4.52 | 3.36 | 3.58 |
| (B₂O₃+Al₂O₃+Ti O₂+Nb₂O₅+WO₃ +ZrO₂ ) /Na₂O | 0.10 | 0 | 0 | 0 | 0 | 0 | 0 |
| n_{d} | 1.54663 | 1.53268 | 1.52683 | 1.53247 | 1.54026 | 1.52846 | 1.53026 |
| ν_{d} | 49.33 | 48.27 | 47.93 | 48.35 | 49.22 | 48.42 | 47.67 |
| τ₃₆₅ₙₘ (%) | 99.6 | 99.8 | 99.7 | 99.6 | 99.8 | 99.8 | 99.6 |
| Δτ₃₆₅ₙₘ (%) | 0.8 | 0.6 | 0.7 | 0.6 | 0.6 | 0.7 | 0.9 |
| D_{A} | Class 1 | Class 1 | Class 1 | Class 1 | Class 1 | Class 1 | Class 1 |
| Dw | Class 1 | Class 1 | Class 1 | Class 1 | Class 1 | Class 1 | Class 1 |
| T_{g}(°C) | 462 | 463 | 467 | 462 | 460 | 459 | 461 |
| α_{20/120°C} (× 10 to ^{7/}K) | 92 | 84 | 83 | 80 | 82 | 81 | 80 |
| Bubble concentration (Grade) | A₀ | A₀₀ | A₀₀ | A₀₀ | A₀₀ | A₀₀ | A₀₀ |
| Extent of striae (Grade) | C | B | B | B | B | B | B |

### < Glass Preform Examples >

The glasses obtained in glass composition examples 1 to 21 were used, for instance, by means of grinding processing or by methods such as hot pressing molding or precision stamping molding for making preforms of various lenses and prisms, such as concave meniscus lenses, convex meniscus lenses, biconvex lenses, biconcave lenses, plano-convex lenses, and plano-concave lenses.

### < Glass Element Examples >

The glass preforms obtained from the above-mentioned glass preform examples are annealed to lower internal stress within the glass and fine-tune the refractive index, so that the refractive index and other optical properties reach the desired values.

Subsequently, each glass preform was subjected to grinding and polishing to manufacture various lenses and prisms, including concave meniscus lenses, convex meniscus lenses, biconvex lenses, biconcave lenses, plano-convex lenses, and plano-concave lenses. An anti-reflection coating may further be applied to the surface of the resulting glass elements.

### < Devices Examples >

The glass elements produced in the aforementioned glass element examples can be utilized through optical design by employing one or more such elements to form optical components or assemblies. They are applicable in, for example, imaging devices, sensors, microscopes, medical technology, digital projection, communications, optical communication technology/information transmission, optics/illumination in the automotive field, lithography technology, excimer lasers, wafers, computer chips, and integrated circuits and electronic devices containing such circuits and chips.

## Claims

1. A glass composition, **characterized in that** the glass composition comprises the following components expressed in percentage by weight: 58% to 75% of SiO₂; 13% to 28% of PbO; 2% to 12% of Na₂O; 3% to 13% of K₂O, wherein a ratio of (Na₂O + K₂O) to PbO is in a range of 0.2 to 1.5.

2. The glass composition according to claim 1, **characterized in that** the glass composition further comprises the following components expressed in percentage by weight: 0% to 5% of Li₂O; and/or 0% to 4% of Al₂O₃; and/or 0% to 4% of ZrO₂; and/or 0% to 8% of RO; and/or 0% to 4% of B₂O₃; and/or 0% to 5% of Ln₂O₃; and/or 0% to 3% of Nb₂O₅; and/or 0% to 3% of WO₃; and/or 0% to 3% of ZnO; and/or 0% to 3% of TiO₂; and/or 0% to 1% of a fining agent; wherein RO is one or more selected from the group consisting of BaO, SrO, CaO, and MgO; wherein Ln₂O₃ is one or more selected from the group consisting of La₂O₃, Gd₂O₃, Y₂O₃, and Yb₂O₃; and wherein the fining agent is one or more selected from the group consisting of Sb₂O₃, SnO₂, and CeO₂.

3. A glass composition, **characterized in that** the glass composition comprises SiO₂, PbO, Na₂O and K₂O expressed in percentage by weight, a ratio of (Na₂O + K₂O) to PbO is in the range of 0.2 to 1.5, and the glass composition has an acid resistance (D_{A}) of Class 2 or higher, a hydrolytic resistance stability (D_{W}) of Class 2 or higher, and a transmittance τ₃₆₅ₙₘ at 365 nm of 98.5% or more.

4. The glass composition according to claim 3, **characterized in that** the glass composition comprises the following components expressed in percentage by weight: 58% to 75% of SiO₂; and/or 13% to 28% of PbO; and/or 2% to 12% of Na₂O; and/or 3% to 13% of K₂O; and/or 0% to 5% of Li₂O; and/or 0% to 4% of Al₂O₃; and/or 0% to 4% of ZrO₂; and/or 0% to 8% of RO; and/or 0% to 4% of B₂O₃; and/or 0% to 5% of Ln₂O₃; and/or 0% to 3% of Nb₂O₅; and/or 0% to 3% of WO₃; and/or 0% to 3% of ZnO; and/or 0% to 3% of TiO₂; and/or 0% to 1% of a fining agent; wherein RO is one or more selected from the group consisting of BaO, SrO, CaO and MgO; wherein Ln₂O₃ is one or more selected from the group consisting of La₂O₃, Gd₂O₃, Y₂O₃ and Yb₂O₃; and wherein the fining agent is one or more selected from the group consisting of Sb₂O₃, SnO₂ and CeO₂.

5. The glass composition according to any one of claims 1 to 4, **characterized in that** the components of the glass composition are expressed in percentage by weight, and satisfy one or more of the following conditions:
1) a ratio of (SiO₂ + Na₂O) to PbO is in the range of 2.7 to 6.0;
2) a ratio of (Na₂O + K₂O) to PbO is in the range of 0.3 to 1.3;
3) a ratio of SiO₂ to (Na₂O + K₂O) is in the range of 2.5 to 12.0;
4) a ratio of (RO + ZnO) to K₂O is 1.0 or less; and
5) a ratio of (B₂O₃ + Al₂O₃ + TiO₂ + Nb₂O₅ + WO₃ + ZrO₂) to Na₂O is 1.0 or less; wherein RO is one or more selected from the group consisting of BaO, SrO, CaO and MgO.

6. The glass composition according to any one of claims 1 to 4, **characterized in that** the components of the composition are expressed in percentage by weight, and satisfy one or more of the following conditions:
1) a ratio of (SiO₂ + Na₂O) to PbO is in the range of 2.9 to 5.5;
2) a ratio of (Na₂O + K₂O) to PbO is in the range of 0.4 to 1.0;
3) a ratio of SiO₂ to (Na₂O + K₂O) is in the range of 3.0 to 10.0;
4) a ratio of (RO + ZnO) to K₂O is 0.8 or less; and
5) a ratio of (B₂O₃ + Al₂O₃ + TiO₂ + Nb₂O₅ + WO₃ + ZrO₂) to Na₂O is 0.8 or less; wherein RO is one or more selected from the group consisting of BaO, SrO, CaO and MgO.

7. The glass composition according to any one of claims 1 to 4, **characterized in that** the components of the composition are expressed in percentage by weight, and satisfy one or more of the following conditions:
1) a ratio of (SiO₂ + Na₂O) to PbO is in the range of 3.0 to 5.0;
2) a ratio of (Na₂O + K₂O) to PbO is in the range of 0.5 to 0.9;
3) a ratio of SiO₂ to (Na₂O + K₂O) is in the range of 3.5 to 8.0;
4) a ratio of (RO + ZnO) to K₂O is 0.5 or less; and
5) a ratio of (B₂O₃ + Al₂O₃ + TiO₂ + Nb₂O₅ + WO₃ + ZrO₂) to Na₂O is 0.5 or less; wherein RO is one or more selected from the group consisting of BaO, SrO, CaO and MgO.

8. The glass composition according to any one of claims 1 to 4, **characterized in that** the components of the composition are expressed in percentage by weight, and satisfy one or more of the following conditions:
1) a ratio of (SiO₂ + Na₂O) to PbO is in the range of 3.2 to 4.5;
2) a ratio of SiO₂ to (Na₂O + K₂O) is in the range of 4.0 to 6.0;
3) a ratio of (RO + ZnO) to K₂O is 0.2 or less; and
4) a ratio of (B₂O₃ + Al₂O₃ + TiO₂ + Nb₂O₅ + WO₃ + ZrO₂) to Na₂O is 0.2 or less; wherein RO is one or more selected from the group consisting of BaO, SrO, CaO and MgO.

9. The glass composition according to any one of claims 1 to 4, **characterized in that** the glass composition comprises the following components expressed in percentage by weight: 60% to 72% of SiO₂; and/or 15% to 25% of PbO; and/or 3% to 10% of Na₂O; and/or 5% to 12% of K₂O; and/or 0% to 2% of Al₂O₃; and/or 0% to 4% of RO; and/or 0% to 3% of Li₂O; and/or 0% to 2% of ZrO₂; and/or 0% to 3% of B₂O₃; and/or 0% to 3% of Ln₂O₃; and/or 0% to 2% of Nb₂O₅; and/or 0% to 2% of WO₃; and/or 0% to 2% of ZnO; and/or 0% to 2% of TiO₂; and/or 0% to 0.8% of a fining agent; wherein RO is one or more selected from the group consisting of BaO, SrO, CaO and MgO; wherein Ln₂O₃ is one or more selected from the group consisting of La₂O₃, Gd₂O₃, Y₂O₃ and Yb₂O₃; and wherein the fining agent is one or more selected from the group consisting of Sb₂O₃, SnO₂ and CeO₂.

10. The glass composition according to any one of claims 1 to 4, **characterized in that** the glass composition comprises the following components expressed in percentage by weight: 63% to 70% of SiO₂; and/or 17% to 23% of PbO; and/or 5% to 9% of Na₂O; and/or 6% to 11% of K₂O; and/or 0% to 1% of Al₂O₃; and/or 0% to 1.5% of RO; and/or 0% to 2% of Li₂O; and/or 0% to 1% of ZrO₂; and/or 0% to 1% of B₂O₃; and/or 0% to 2% of Ln₂O₃; and/or 0% to 1% of Nb₂O₅; and/or 0% to 1% of WO₃; and/or 0% to 1% of ZnO; and/or 0% to 1% of TiO₂; and/or 0% to 0.5% of a fining agent; wherein RO is one or more selected from the group consisting of BaO, SrO, CaO and MgO; wherein Ln₂O₃ is one or more selected from the group consisting of La₂O₃, Gd₂O₃, Y₂O₃ and Yb₂O₃; and wherein the fining agent is one or more selected from the group consisting of Sb₂O₃, SnO₂ and CeO₂.

11. The glass composition according to any one of claims 1 to 4, **characterized in that** the glass composition is free of Li₂O; and/or is free of Al₂O₃; and/or is free of ZrO₂; and/or is free of SrO; and/or is free of CaO; and/or is free of MgO; and/or is free of BaO; and/or is free of B₂O₃; and/or is free of Nb₂O₅; and/or is free of WO₃; and/or is free of ZnO; and/or is free of TiO₂; and/or is free of F.

12. The glass composition according to any one of claims 1 to 4, **characterized in that** the glass composition has a transmittance τ₃₆₅ₙₘ at 365 nm of 99.0% or more; and/or a resistance to ultraviolet-induced transmittance decay at 365 nm, Δτ₃₆₅ₙₘ, of 1.5% or less; and/or a refractive index n_{d} in the range of 1.50 to 1.57; and/or an Abbe number v_{d} in the range of 46 to 52; and/or an acid resistance stability (D_{A}) of Class 2 or higher; and/or a hydrolytic resistance stability (D_{W}) of Class 2 or higher; and/or a coefficient of thermal expansion α_{20/120°C} of 98 × 10⁻⁷ /K or less; and/or a glass transition temperature T_{g} of 490°C or less; and/or a bubble concentration of Grade A or higher; and/or an extent of striae of Grade C or higher.

13. The glass composition according to any one of claims 1 to 4, **characterized in that** the glass composition has a transmittance τ₃₆₅ₙₘ at 365 nm of 99.5% or more; and/or a resistance to ultraviolet-induced transmittance decay at 365 nm, Δτ₃₆₅ₙₘ, of 0.9% or less; and/or a refractive index n_{d} in the range of 1.52 to 1.55; and/or an Abbe number ν_{d} in the range of 47.5 to 49.5; and/or an acid resistance stability (D_{A}) of Class 1; and/or a hydrolytic resistance stability (D_{W}) of Class 1; and/or a coefficient of thermal expansion α_{20/120°C} of 85 × 10⁻⁷ /K or less; and/or a glass transition temperature T_{g} of 470°C or less; and/or a bubble concentration of Grade A₀₀; and/or a extent of striae of Grade B or higher.

14. A glass element, **characterized in that** the glass element is made of the glass composition according to any one of claims 1 to 4.

15. A device, **characterized in that** the device comprises the glass composition according to any one of claims 1 to 4, and/or comprises the glass element according to claim 14.
